# FASCICULE DE BREVET EUROPEEN

(11) **EP 3 787 865 B1**
(45) Date de publication et mention de la délivrance du brevet: **24.08.2022**
(21) Numéro de dépôt: 19728125.6
(22) Date de dépôt: 26.04.2019
(51) Int. Cl.: B29C 33/10, B29D 30/06

(54) **ELEMENT MOULANT AVEC FENTE D'EVACUATION DE L'AIR ET SECTEUR DE MICRO-MOULAGE**
FORMTEIL MIT LUFTAUSTRITTSSCHLITZ UND MIKROFORMBEREICH
MOULDING ELEMENT WITH AIR DISCHARGE SLOT AND MICRO-MOULDING SECTOR

(30) Priorité: 30.04.2018 FR 1800391
(43) Date de publication de la demande: 10.03.2021
(73) Titulaire: Compagnie Générale des Etablissements Michelin, 63000 Clermont-Ferrand (FR)
(72) Inventeur: CALVEL, Romain, 63040 Clermont-Ferrand Cedex 09 (FR); LESMARIE, Michel, 63040 Clermont-Ferrand Cedex 09 (FR)
(74) Mandataire: Roussy, Delphine
(86) Numéro de dépôt international: PCT/IB2019/053450
(87) Numéro de publication internationale: WO 2019/211711

(56) Documents cités:
- EP-A1- 3 308 924
- JP-A- 2009 160 862
- US-A- 4 492 554

## Description

### Description: DOMAINE TECHNIQUE DE L'INVENTION

La présente invention concerne un élément moulant destiné à être assemblé dans un moule pour le moulage de la partie extérieure de la bande de roulement d'un pneumatique, l'élément moulant comprenant une surface de moulage de bande de roulement pourvue de motifs destinés au moulage de la bande de roulement, et au moins une fente pour l'évacuation d'un flux d'air de l'intérieur du moule vers l'extérieur du moule.

### ETAT DE LA TECHNIQUE ANTERIEURE

Lors du processus de moulage et de vulcanisation des pneumatiques, les effets combinés de la pression, de la température et des réactions chimiques en cours génèrent une certaine quantité de gaz qui doit être libérée du moule pendant le moulage. Pour mettre en place des moyens d'évacuation des gaz, les industriels utilisent en général une solution consistant à utiliser des moules dont la couronne externe comporte des petits trous formant une pluralité des tunnels d'évacuation répartis sur la circonférence du moule. Cette approche est certes efficace pour assurer le passage des gaz, mais produit à la surface de la bande de roulement des picots, de forme correspondante au profil des trous, formés par le mélange caoutchoutique qui a tendance à fluer dans les ouvertures d'éventation. Ces picots, disséminés sur la périphérie de la bande de roulement et souvent sur une portion des flancs du pneumatique, affectent l'esthétique du produit final et perdurent tant et aussi longtemps que le pneumatique n'a pas roulé un certain nombre de kilomètres. Pour éviter la présence de ces picots, les industriels recherchent depuis longtemps une solution pour permettre le flux d'air ou de gaz vers l'extérieur du moule, sans toutefois altérer final du produit nouvellement moulé.

Le document US5059380 décrit un exemple de solution permettant une ventilation du moule avec formation de picots. Le moule décrit comprend une pluralité d'inserts prévus pour permettre le passage de l'air lors du moulage. Pendant le moulage, le mélange caoutchoutique peut fluer et s'introduire dans les inserts, formant ainsi des picots à la surface de la bande de roulement.

Le document EP1361042 décrit un moule pour pneumatique comportant une couronne périphérique feuilletée. Cette couronne est constituée par un empilage dans la direction circonférentielle d'une pluralité de tôles de faible épaisseur. Des découpes réparties sur plusieurs tôles adjacentes augmentent le potentiel d'éventation du moule. Ce mode de réalisation est efficace pour un moule feuilleté uniquement.

Le document JP 2009 160862 A divulgue les caractéristiques du préambule de la revendication indépendante 1.

Il existe donc un besoin pour un moule favorisant l'évacuation de l'air pendant le moulage, mais sans affecter l'esthétique du pneumatique moulé.

Pour pallier ces différents inconvénients, l'invention prévoit différents moyens techniques.

### EXPOSE DE L'INVENTION

Tout d'abord, un premier objet de l'invention consiste à prévoir un élément de moulage pour moule de pneumatique qui permet l'évacuation de l'air libéré dans le moule lors de la phase de vulcanisation vers l'extérieur du moule, sans formation de « picots » comme dans les moules traditionnels.

Un autre objet de l'invention consiste à prévoir un élément de moulage pour moule de pneumatique qui permet de générer des micro-sculptures à la surface du pneumatique moulé.

Pour ce faire, l'invention prévoit un élément moulant destiné à être assemblé dans un moule pour le moulage de la partie extérieure de la bande de roulement d'un pneumatique, ledit élément moulant comprenant une surface de moulage destinée au moulage de la bande de roulement et une surface externe, des moyens d'éventation pour l'évacuation d'un flux d'air de la surface de moulage vers la surface externe, lesdits moyens d'éventation comprenant une première partie de largeur La1 et de longueur Lo1, une deuxième partie en communication fluidique avec la première partie et débouchant sur la surface externe, l'élément moulant comprenant également une troisième partie, ladite troisième partie étant en communication fluidique avec ladite première partie et débouchant sur la surface de moulage de la bande de roulement, ladite troisième partie ayant une largeur La3 supérieure à la largeur La1 de ladite première partie et la largeur La1 de la première partie étant inférieure ou égale à 0,06mm.

Une telle architecture permet, lors de la phase de vulcanisation d'un pneumatique, l'évacuation de l'air libéré dans le moule vers l'extérieur du moule, sans formation de « picots » comme dans les moules traditionnels. La zone de moulage de micro-sculpture permet de loger le mélange élastomère fluant et remplissant ce secteur. Ainsi, après démoulage, on obtient sur la surface de la bande de roulement du pneumatique autant de micro-lamelles qu'il y a de secteurs de moulage de micro-sculptures sur le moule.

Selon un mode de réalisation, la longueur Lo3 de la troisième partie est supérieure à la longueur Lo1 de la première partie.

Dans une variante, une pluralité de premières et deuxièmes parties sont en communication fluidique avec une même troisième partie.

Cet agencement favorise une meilleure évacuation de l'air vers l'extérieur de la zone de moulage.

Selon un exemple de réalisation particulier, la largeur La3 de la troisième partie est au moins 25% supérieure à la largeur La1 de la première partie et préférentiellement au moins 50% supérieure à la largeur La1 de la première partie.

Selon encore un exemple de réalisation, la largeur La3 de la troisième partie est comprise entre 0,05mm et 1mm.

La largeur La1 est suffisamment faible pour créer une restriction à travers laquelle le mélange élastomère ne peut pas passer. Une telle barrière permet d'éviter le passage du mélange élastomère vers la première et la deuxième partie des moyens d'éventation pour éviter toute obstruction des conduits.

Selon un mode de réalisation particulier, la profondeur P3 de la troisième partie est comprise entre 0,1 et 0,5 mm.

Cette profondeur, limitée à une faible valeur, permet de s'assurer qu'il y ait suffisamment de mélange élastomère pour remplir complètement le secteur de moulage de micro-lamelle. En effet, avec des secteurs de moulage de micro-lamelles de forte profondeur, il y a un risque, augmentant en fonction de la profondeur, qu'au moins une zone de moulage de micro-sculpture ne se remplisse pas complètement lors d'une vulcanisation d'un pneumatique. Cela a également un impact esthétique puisque la micro-lamelle obtenue est de faibles dimensions pour se fondre dans le design du pneumatique sans impacter ses performances.

Selon encore un exemple de réalisation, la profondeur totale de la première partie et de la troisième partie P1 et P3 est inférieure ou égale à 3mm.

Selon une variante, la troisième partie comprend des parois opposées disposées de façon convergente.

Encore en variante, la deuxième partie est constituée d'une cavité cylindrique ou d'une rainure se prolongeant sur tout ou partie de la longueur de la première partie.

La cavité peut être coaxiale ou non à un plan E-E d'éventation. La rainure peut être coaxiale ou non au plan E-E d'éventation. La cavité ou la rainure de la deuxième partie facilitent la réalisation d'un moyen d'éventation traversant tout l'élément moulant, difficile à réaliser en effectuant un perçage unique depuis l'intérieur de l'élément moulant, en particulier pour de faibles largeurs de fentes. Le plan d'éventation E-E passe par le centre de la première partie et par le centre de la deuxième partie.

L'invention prévoit également un moule pour pneumatique comprenant une pluralité d'éléments moulants tels que préalablement décrits.

### DESCRIPTION DES FIGURES

Tous les détails de réalisation sont donnés dans la description qui suit, complétée par les figures 1 à 4, présentées uniquement à des fins d'exemples non limitatifs, et dans lesquelles :
- la figure 1 illustre un exemple d'une portion d'un élément moulant de l'art antérieur ;
- la figure 2a est une vue en coupe d'une représentation schématique d'un exemple d'une portion d'un élément moulant avec un moyen d'éventation, la vue étant dans le sens de la longueur ;
- la figure 2b est une vue de l'élément moulant de la figure 2a dans le sens de la largeur ;
- la figure 3 est une variante de réalisation de l'élément moulant de la figure 2a avec une pluralité d'ouvertures ;
- la figure 4 est une autre variante de réalisation de l'élément moulant de la figure 1a avec des parois convergentes pour une des parties du moyen d'éventation.

### DESCRIPTION DETAILLEE DE L'INVENTION

Par « moyen d'éventation », on entend un tunnel étroit permettant l'évacuation de l'air vers l'extérieur du moule lors de la phase de vulcanisation, l'agencement et les dimensions du tunnel étant adaptés pour éviter que le mélange caoutchoutique en cours de moulage ne puisse obturer le tunnel.

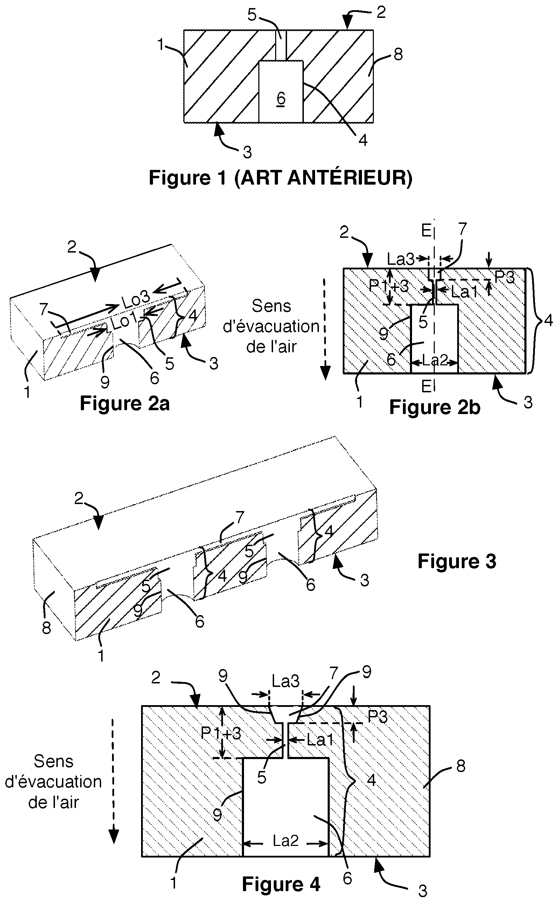

La figure 1 illustre un exemple d'élément moulant de type connu. On utilise en général une pluralité d'éléments moulants 1 assemblés dans un moule afin de former le profil de la partie extérieure de la bande de roulement d'un pneumatique en cours de moulage. Des moyens d'éventation 4, répartis sur la circonférence du moule, permettent d'évacuer l'air présent dans le moule lors de la phase de moulage. Le flux d'air utilise donc les moyens d'éventation pour passer de l'intérieur du moule vers l'extérieur du moule.

**De** façon classique, l'élément de moule comprend un corps 8 formant d'un côté une surface de moulage 2 de bande de roulement et de l'autre, une surface externe 3 de moule. Dans l'exemple connu illustré à la figure 1, le moyen d'éventation comprend une première partie 5, débouchant sur la surface de moulage, et une deuxième partie 6 en communication fluidique avec la première partie 5 et débouchant sur la surface externe 3. Dans l'exemple de la figure 1, la deuxième partie 6 est plus large que la première partie 5.

Les figures 2a et 2b illustrent un exemple d'élément moulant selon l'invention. Plus précisément, les figures 2a et 2b illustrent une portion d'un élément moulant 1 destiné à être placé dans un moule afin de structurer la bande de roulement d'un pneumatique lors de la phase de moulage. La figure 2a illustre l'élément moulant 1 orienté de façon à présenter une coupe dans le sens de la longueur du moyen d'éventation 4. La figure 2b illustre l'élément moulant 1 orienté de façon à présenter une coupe dans le sens de la largeur du moyen d'éventation 4.

L'élément moulant 1 comprend une surface de moulage 2 de bande de roulement prévue pour mouler la bande de roulement, et une surface externe 3 disposée à l'opposé de la surface de moulage 2. Le corps 8 de l'élément moulant sépare les deux surfaces 2 et 3. Dans l'exemple des figures 2a et 2b, l'élément moulant 1 comprend un moyen d'éventation 4. Selon divers modes de réalisation, les éléments moulants 1 comportent un seul ou une pluralité de moyens d'éventation. Le moyen d'éventation permet d'évacuer l'air présent dans le moule lors de la phase de moulage. L'évacuation de l'air (et/ou tout autre gaz présent dans le moule) se fait depuis l'intérieur du moule, vers la surface externe du moule 3, dans le sens de la flèche illustrée aux figures 2b et 4. Tel qu'illustré aux figures 2a et 2b, le moyen d'éventation 4 comporte une première partie 5 située dans la masse du corps 8 constituant l'élément de moulage. Une deuxième partie 6 est en communication fluidique avec la surface externe 3 du moule. La première partie 5 et la deuxième partie 6 sont au moins partiellement alignées l'une avec l'autre de façon à permettre le passage du flux d'air à évacuer du moule. Dans les exemples illustrés, la première partie 5 et la deuxième partie 6 sont coaxiales par rapport à l'axe E-E d'éventation.

Tel qu'illustré dans l'exemple des figures 2a et 2b, le moyen d'éventation comprend également une troisième partie 7 disposée de façon à être en communication fluidique avec la surface de moulage 2 et avec la première partie 5.

**La** largeur La3 (figure 2b) de la troisième partie 7 est supérieure à la largeur La1 de la première partie 5. Par ailleurs, dans l'exemple illustré, la longueur Lo3 (figure 2a) de la troisième partie 7 est également supérieure à la longueur Lo1 de la première partie 5. Ces dimensions élargies de la troisième partie 7 par rapport à la première partie 5 permettent d'obtenir une surface suffisamment grande pour effectuer des micro-moulages. La surface de la troisième partie 7 est suffisante pour permettre au mélange caoutchoutique en cours de moulage de fluer pour remplir cette partie et former un profil moulé correspondant au profil de la troisième partie. Lors du démoulage du pneumatique, des microstructures sont ainsi formées à la surface du pneumatique à chaque moyen d'éventation 4 comportant une troisième partie 7 telle que préalablement décrit. Ces microstructures sont de préférence de faibles hauteurs et épaisseurs. Pour obtenir de telles faibles hauteurs, on prévoit par exemple une profondeur P3 (figure 2b) de la troisième partie comprise entre 0,1 et 0,5 mm.

**Dans** un exemple, la largeur La3 de la troisième partie est au moins 25% supérieure à la largeur La1 de la première partie et préférentiellement au moins 50% supérieure à la largeur La1 de la première partie.

La largeur La3 est par exemple comprise entre 0,05mm et 1mm. La largeur La1 de la première partie 5 est comprise entre 0,03mm et 0,07mm, et plus préférentiellement inférieure ou égale à 0,05mm. La largeur La1 est réduite afin de former une restriction à travers laquelle le mélange élastomère ne peut pas fluer. Une telle restriction permet d'éviter le passage du mélange élastomère vers la première partie, puis éventuellement vers la deuxième partie des moyens d'éventation, minimisant les risques d'obturation des conduits.

Pour sa part, la largeur La2 de la deuxième partie 6 est comprise entre 1mm et 5mm, et plus préférentiellement entre 2mm et 3mm. Cette plus grande largeur par rapport à la première partie favorise un bon écoulement du flux d'air et facilite la mise en œuvre du moyen d'éventation.

**La** profondeur cumulée P1+P3 de la première partie 5 et de la troisième partie 7 est inférieure ou égale à 5mm et plus préférentiellement inférieure à 3mm. Une telle profondeur permet de réaliser ces deux parties à l'aide de procédés d'usinage tels que le laser contenu dans un jet d'eau. Un tel procédé permet de mettre en œuvre des fentes très minces, toutefois pour des profondeurs limitées.

Dans les exemples illustrés, la deuxième partie 6 est constituée d'une cavité cylindrique. La cavité peut être coaxiale ou non au plan E-E d'éventation. En variante, la deuxième partie 6 est constituée d'une rainure coopérant avec tout ou partie de la première partie 5.

La figure 3 illustre un autre exemple de réalisation d'un élément moulant 1 selon l'invention. Dans cet exemple, une pluralité de premières et deuxièmes parties 5 et 6 sont en communication fluidique avec une même troisième partie 7.

La figure 4 illustre encore une variante de réalisation dans laquelle la troisième partie 7 comprend des parois 9 opposées disposées de façon convergente. Un tel agencement facilite la mise en œuvre de la phase de démoulage.

**Numéros de référence employés sur les figures**

| | |
|---|---|
| 1 | Élément moulant |
| 2 | Surface de moulage de bande de roulement |
| 3 | Surface externe de l'élément moulant |
| 4 | Moyen d'éventation |
| 5 | Première partie des moyens d'éventation |
| 6 | Deuxième partie des moyens d'éventation |
| 7 | Troisième partie des moyens d'éventation |
| 8 | Corps d'élément moulant |
| 9 | Paroi |

## Revendications

1. Élément moulant (1) destiné à être assemblé dans un moule pour le moulage de la partie extérieure de la bande de roulement d'un pneumatique, ledit élément moulant (1) comprenant une surface de moulage (2) destinée au moulage de la bande de roulement et une surface externe (3), des moyens d'éventation (4) pour l'évacuation d'un flux d'air de la surface de moulage (2) vers la surface externe (3), lesdits moyens d'éventation (4) comprenant une première partie (5) de largeur La1 et de longueur Lo1, une deuxième partie (6) en communication fluidique avec la première partie (5) et débouchant sur la surface externe (3), et une troisième partie (7), ladite troisième partie (7) étant en communication fluidique avec ladite première partie et débouchant sur la surface (2) de moulage de la bande de roulement, ladite troisième partie ayant une largeur La3 supérieure à la largeur La1 de ladite première partie (5), **caractérisé en ce que** la largeur La1 de la première partie est inférieure ou égale à 0,06mm.

2. Élément moulant (1) selon la revendication 1, **caractérisé en ce que** la largeur La3 de la troisième partie est au moins 25% supérieure à la largeur La1 de la première partie et préférentiellement au moins 50% supérieure à la largeur La1 de la première partie.

3. Élément moulant (1) selon l'une des revendications 1 ou 2, **caractérisé en ce que** la longueur Lo3 de la troisième partie (7) est supérieure à la longueur Lo1 de la première partie (5).

4. Élément moulant (1) selon quelconque l'une des revendications 1 à 3, dans lequel une pluralité de premières et deuxièmes parties (5, 6) sont en communication fluidique avec une même troisième partie (7).

5. Élément moulant (1) selon l'une quelconque des revendications précédentes, **caractérisé en ce que** la largeur La3 de la troisième partie est comprise entre 0,05mm et 1mm.

6. Élément moulant (1) selon l'une quelconque des revendications précédentes, dans lequel la profondeur P3 de la troisième partie est comprise entre 0,1 et 0,5 mm.

7. Élément moulant (1) selon l'une quelconque des revendications précédentes, dans lequel la profondeur totale (P1 et P3) de la première partie (5) et de la troisième partie (7) est inférieure ou égale à 3mm.

8. Élément moulant (1) selon l'une quelconque des revendications précédentes, **caractérisé en ce que** la troisième partie (7) comprend des parois (9) opposées disposées de façon convergente.

9. Élément moulant (1) selon l'une quelconque des revendications précédentes, **caractérisé en ce que** la deuxième partie (6) est constituée d'une cavité cylindrique ou d'une rainure se prolongeant sur tout ou partie de la longueur de la fente.

10. Moule pour pneumatique comprenant une pluralité d'éléments moulants selon l'une quelconque des revendications 1 à 9.

## Patentansprüche

1. Formelement (1), welches dazu bestimmt ist, in einer Form zum Formen des äußeren Teils des Laufstreifens eines Reifens montiert zu werden, wobei das Formelement (1) eine Formfläche (2), die zum Formen des Laufstreifens bestimmt ist, und eine äußere Fläche (3) aufweist, sowie Entlüftungsmittel (4) zum Abführen eines Luftstroms von der Formfläche (2) zur äußeren Fläche (3) hin, wobei die Entlüftungsmittel (4) einen ersten Teil (5) mit einer Breite La1 und einer Länge Lo1, einen zweiten Teil (6), der mit dem ersten Teil (5) in Fluidverbindung steht und auf der äußeren Fläche (3) mündet, und einen dritten Teil (7) umfassen, wobei der dritte Teil (7) mit dem ersten Teil in Fluidverbindung steht und auf der Formfläche (2) für den Laufstreifen mündet, wobei der dritte Teil eine Breite La3 aufweist, die größer als die Breite La1 des ersten Teils (5) ist, und
**dadurch gekennzeichnet, dass** die Breite La1 des ersten Teils kleiner oder gleich 0,06 mm ist.

2. Formelement (1) nach Anspruch 1, **dadurch gekennzeichnet, dass** die Breite La3 des dritten Teils um mindestens 25 % größer als die Breite La1 des ersten Teils ist und vorzugsweise um mindestens 50 % größer als die Breite La1 des ersten Teils ist.

3. Formelement (1) nach einem der Ansprüche 1 oder 2, **dadurch gekennzeichnet, dass** die Länge Lo3 des dritten Teils (7) größer als die Länge Lo1 des ersten Teils (5) ist.

4. Formelement (1) nach einem der Ansprüche 1 bis 3, wobei mehrere erste und zweite Teile (5, 6) mit ein und demselben dritten Teil (7) in Fluidverbindung stehen.

5. Formelement (1) nach einem der vorhergehenden Ansprüche, **dadurch gekennzeichnet, dass** die Breite La3 des dritten Teils zwischen 0,05 mm und 1 mm beträgt.

6. Formelement (1) nach einem der vorhergehenden Ansprüche, wobei die Tiefe P3 des dritten Teils zwischen 0,1 und 0,5 mm beträgt.

7. Formelement (1) nach einem der vorhergehenden Ansprüche, wobei die Gesamttiefe (P1 und P3) des ersten Teils (5) und des dritten Teils (7) kleiner oder gleich 3 mm ist.

8. Formelement (1) nach einem der vorhergehenden Ansprüche, **dadurch gekennzeichnet, dass** der dritte (7) einander gegenüberliegende Wände (9) umfasst, die zusammenlaufend angeordnet sind.

9. Formelement (1) nach einem der vorhergehenden Ansprüche, **dadurch gekennzeichnet, dass** der zweite Teil (6) aus einem zylindrischen Hohlraum oder einer Nut besteht, die sich über die gesamte Länge des Schlitzes oder einen Teil davon erstreckt.

10. Form für einen Reifen, welche mehrere Formelemente nach einem der Ansprüche 1 bis 9 umfasst.

## Claims

1. Moulding element (1) intended to be assembled in a mould for moulding the exterior part of the tread of a tyre, said moulding element (1) comprising a moulding surface (2) intended for moulding the tread and an external surface (3), venting means (4) for discharging a flow of air from the moulding surface (2) towards the external surface (3), said venting means (4) comprising a first part (5) of width La1 and of length Lo1, a second part (6) in fluidic communication with the first part (5) and opening onto the external surface (3), and the moulding element also comprises a third part (7), said third part (7) being in fluidic communication with said first part and opening onto the tread-moulding surface (2), said third part having a width La3 greater than the width La1 of said first part (5) **characterized in that** the width La1 of the first part being less than or equal to 0.06 mm.

2. Moulding element (1) according to Claim 1, **characterized in that** the width La3 of the third part is at least 25% greater than the width La1 of the first part, and preferably at least 50% greater than the width La1 of the first part.

3. Moulding element (1) according to one of Claims 1 and 2, **characterized in that** the length Lo3 of the third part (7) is greater than the length Lo1 of the first part (5).

4. Moulding element (1) according to any one of Claims 1 to 3, wherein a plurality of first and second parts (5, 6) are in fluidic communication with the one same third part (7).

5. Moulding element (1) according to any one of the preceding claims, **characterized in that** the width La3 of the third part is comprised between 0.05 mm and 1 mm.

6. Moulding element (1) according to any one of the preceding claims, wherein the depth P3 of the third part is comprised between 0.1 and 0.5 mm.

7. Moulding element (1) according to any one of the preceding claims, wherein the total depth (P1 and P3) of the first part (5) and of the third part (7) is less than or equal to 3 mm.

8. Moulding element (1) according to any one of the preceding claims, **characterized in that** the third part (7) comprises opposing walls (9) arranged such that they are convergent.

9. Moulding element (1) according to any one of the preceding claims, **characterized in that** the second part (6) consists of a cylindrical cavity or of a groove extending over all or part of the length of the slot.

10. Tyre mould comprising a plurality of moulding elements according to any one of the Claims 1 to 9.
